# EUROPEAN PATENT SPECIFICATION

(11) **EP 3 354 848 B1**
(45) Date of publication and mention of the grant of the patent: **31.07.2019**
(21) Application number: 18153270.6
(22) Date of filing: 24.01.2018
(51) Int. Cl.: F01D 5/14, F01D 9/02, F01D 9/04, F01D 9/06, F01D 25/00

(54) **INTER-TURBINE DUCTS WITH MULTIPLE SPLITTER BLADES**
ZWISCHENTURBINENKANÄLE MIT MEHREREN ZWISCHENSCHAUFELN
CONDUITS INTER-TURBINE AVEC DE MULTIPLES PALES SÉPARATRICES

(30) Priority: 26.01.2017 US 201715416144
(43) Date of publication of application: 01.08.2018
(73) Proprietor: Honeywell International Inc., Morris Plains, NJ 07950 (US)
(72) Inventor: KUCHANA, Vinayender, Morris Plains, NJ 07950 (US); COUEY, Paul, Morris Plains, NJ 07950 (US); SRINIVASAN, Balamurugan, Morris Plains, NJ 07950 (US); MCKEEVER, Craig, Morris Plains, NJ 07950 (US); MALAK, Malak Fouad, Morris Plains, NJ 07950 (US)
(74) Representative: Houghton, Mark Phillip

(56) References cited:
- EP-A2- 2 554 793
- WO-A1-2006/038879
- US-A1- 2015 300 253

## Description

### TECHNICAL FIELD

The present invention generally relates to gas turbine engines, and more particularly relates to inter-turbine ducts between the turbines of gas turbine engines. A similar turbine section having the features of the preamble of claim 1 is disclosed in EP 2 554 793 A2.

### BACKGROUND

A gas turbine engine may be used to power various types of vehicles and systems. A gas turbine engine may include, for example, five major sections: a fan section, a compressor section, a combustor section, a turbine section, and an exhaust nozzle section. The fan section induces air from the surrounding environment into the engine and accelerates a fraction of this air toward the compressor section. The remaining fraction of air induced into the fan section is accelerated through a bypass plenum and exhausted. The compressor section raises the pressure of the air it receives from the fan section and directs the compressed air into the combustor section where it is mixed with fuel and ignited. The high-energy combustion products then flow into and through the turbine section, thereby causing rotationally mounted turbine blades to rotate and generate energy. The air exiting the turbine section is exhausted from the engine through the exhaust section.

In some engines, the turbine section is implemented with one or more annular turbines, such as a high pressure turbine and a low pressure turbine. The high pressure turbine may be positioned upstream of the low pressure turbine and configured to drive a high pressure compressor, while the low pressure turbine is configured to drive a low pressure compressor and a fan. The high pressure and low pressure turbines have optimal operating speeds, and thus, optimal radial diameters that are different from one another. Because of this difference in radial size, an inter-turbine duct is arranged to fluidly couple the outlet of the high pressure turbine to inlet of the low pressure turbine and to transition between the changes in radius. It is advantageous from a weight and efficiency perspective to have a relatively short inter-turbine duct. However, decreasing the length of the inter-turbine duct increases the radial angle at which the air must flow between the turbines. Increasing the angle of the duct over a relatively short distance may result in boundary layer separation of the flow within the duct, which may adversely affect the performance of the low pressure turbine. Accordingly, the inter-turbine ducts are designed with a compromise between the overall size and issues with boundary separation. As a result, some conventional gas turbine engines may be designed with elongated inter-turbine ducts or inter-turbine ducts that do not achieve the optimal size ratio between the high pressure turbine and the low pressure turbine.

Accordingly, it is desirable to provide gas turbine engines with improved inter-turbine ducts. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, a turbine section of a gas turbine engine is provided. The turbine section includes a first turbine with a first inlet and a first outlet; second turbine with a second inlet and a second outlet; an inter-turbine duct extending from the first outlet to the second inlet and configured to direct an air flow from the first turbine to the second turbine, the inter-turbine duct being defined by a hub and a shroud; and at least two splitter blades disposed within the inter-turbine duct. The at least two splitter blades include a first splitter blade and a second splitter blade radially interior to the first splitter blade. At least the second splitter blade has a radial position that is greater than 60% of a distance from the shroud to the hub.

In accordance with another exemplary embodiment, an inter-turbine duct is provided and extends between a first turbine having a first radial diameter and a second turbine having a second, greater radial diameter. The inter-turbine duct includes a hub; a shroud circumscribing the hub to form a flow path fluidly coupled to the first turbine and the second turbine; and at least two splitter blades disposed within the inter-turbine duct. The at least two splitter blades include a first splitter blade and a second splitter blade radially interior to the first splitter blade. At least the second splitter blade has a radial position that is greater than 60% of a distance from the shroud to the hub.

### BRIEF DESCRIPTION OF THE DRAWINGS

The present invention will hereinafter be described in conjunction with the following drawing figures, wherein like numerals denote like elements, and
FIG. 1 a schematic cross-sectional view of a gas turbine engine in accordance with an exemplary embodiment;
FIG. 2 is a schematic, partial cross-sectional view of a turbine section with an inter-turbine duct of the gas turbine engine of FIG. 1 in accordance with an exemplary embodiment;
FIG. 3 is a schematic top view of the inter-turbine duct of FIG. 2 in accordance with an exemplary embodiment;
FIG. 4 is a schematic, partial cross-sectional view of a turbine section with an inter-turbine duct of a gas turbine engine in accordance with an alternate exemplary embodiment;
FIG. 5 is a graph comparing pressure recovery values of various inter-turbine ducts according to exemplary embodiments;
FIG. 6 is a graph comparing pressure loss values of various inter-turbine ducts according to exemplary embodiments; and
FIG. 7 is a schematic, partial cross-sectional view of a turbine section with an inter-turbine duct of a gas turbine engine in accordance with a further exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Broadly, exemplary embodiments discussed herein provide gas turbine engines with improved inter-turbine ducts. In one exemplary embodiment, the inter-turbine duct is positioned between a high pressure turbine with a relatively small radial diameter and a low pressure turbine with a relatively large radial diameter. The inter-turbine duct may be defined by a shroud forming an outer boundary and a hub forming an inner boundary. The inter-turbine duct may further include a number of splitter blades positioned at particular radial distances that prevent and/or mitigate boundary separation of the air flow from the shroud and other surfaces as the air flow transitions in a radial direction. Improvements in boundary separation enable shorter inter-turbine ducts, and as such, improvements in weight and efficiency.

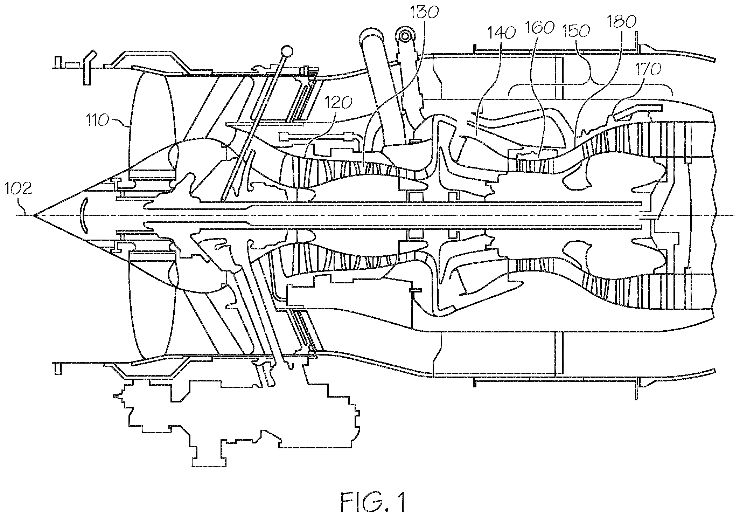

FIG. 1 a schematic cross-sectional view of a gas turbine engine 100 in accordance with an exemplary embodiment. As shown, the engine 100 may be an annular structure about a longitudinal or axial centerline axis 102. In the description that follows, the term "axial" refers broadly to a direction parallel to the axis 102 about which the rotating components of the engine 100 rotate. This axis 102 runs from the front of the engine 100 to the back of the engine 100. The term "radial" refers broadly to a direction that is perpendicular to the axis 102 and that points towards or away from the axis of the engine 100. A "circumferential" direction at a given point is a direction that is normal to the local radial direction and normal to the axial direction. As such, the term "axial-circumferential" plane generally refers to the plane formed by the axial and circumferential directions, and the term "axial-radial" plane generally refers to the plane formed by the axial and radial directions. An "upstream" direction refers to the direction from which the local flow is coming, while a "downstream" direction refers to the direction in which the local flow is traveling. In the most general sense, flow through the engine tends to be from front to back, so the "upstream direction" will generally refer to a forward direction, while a "downstream direction" will refer to a rearward direction.

The engine 100 generally includes, in serial flow communication, a fan section 110, a low pressure compressor 120, a high pressure compressor 130, a combustor 140, and a turbine section 150, which may include a high pressure turbine 160 and a low pressure turbine 170. During operation, ambient air enters the engine 100 at the fan section 110, which directs the air into the compressors 120 and 130. The compressors 120 and 130 provide compressed air to the combustor 140 in which the compressed air is mixed with fuel and ignited to generate hot combustion gases. The combustion gases pass through the high pressure turbine 160 and the low pressure turbine 170. As described in greater detail below, an inter-turbine duct 180 couples the high pressure turbine 160 to the low pressure turbine 170.

The high pressure turbine 160 and low pressure turbine 170 are used to provide thrust via the expulsion of the exhaust gases, to provide mechanical power by rotating a shaft connected to one of the turbines, or to provide a combination of thrust and mechanical power. As one example, the engine 100 is a multi-spool engine in which the high pressure turbine 160 drives the high pressure compressor 130 and the low pressure turbine 170 drives the low pressure compressor 120 and fan section 110.

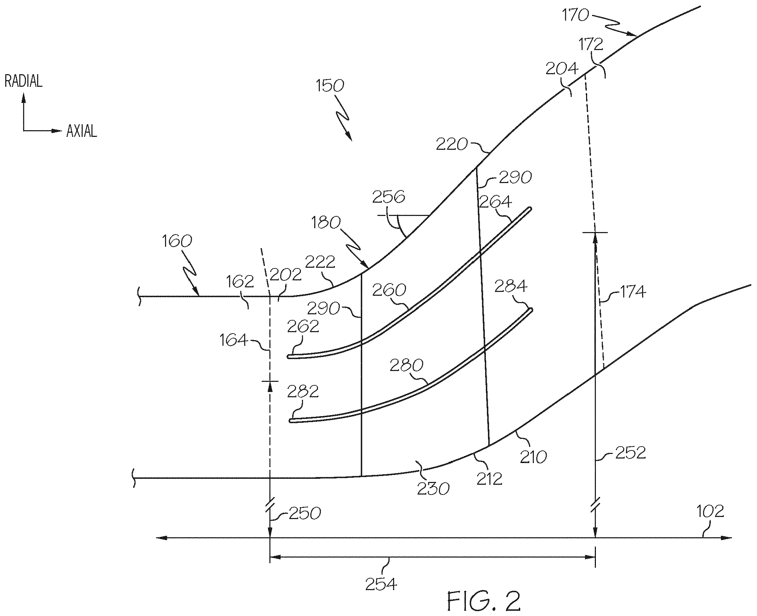

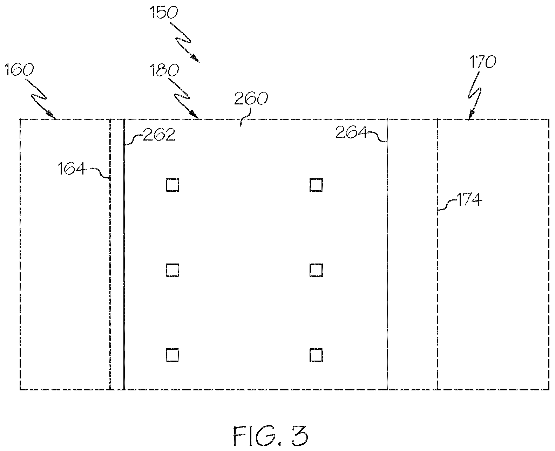

FIG. 2 is a schematic, partial cross-sectional view of a turbine assembly with an inter-turbine duct, such as the inter-turbine duct 180 of the turbine section 150 of the engine 100 of FIG. 1 in accordance with an exemplary embodiment. FIG. 3 is a schematic top view of the turbine section 150 of FIG. 2 in accordance with an exemplary embodiment at a position just radially inwards relative to a shroud, as discussed below. FIG. 2 and 3 will be described together below.

As shown, the turbine section 150 includes the high pressure turbine 160, the low pressure turbine 170, and the inter-turbine duct 180 fluidly coupling the high pressure turbine 160 to the low pressure turbine 170. Particularly, the inter-turbine duct 180 includes an inlet 202 coupled to the outlet 162 of the high pressure turbine 160 and an outlet 204 coupled to the inlet 172 of the low pressure turbine 170. In the depicted embodiment, the boundaries between the high pressure turbine 160 and the inter-turbine duct 180 and between the inter-turbine duct 180 and the low pressure turbine 170 are indicated by dashed lines 164, 174, respectively. The annular structure of the inter-turbine duct 180 is defined by a hub 210 and a shroud 220 to create a flow path 230 for air flow between the high pressure turbine 160 and low pressure turbine 170.

As noted above, the inter-turbine duct 180 transitions from a first radial diameter 250 at the inlet 202 (e.g., corresponding to the radial diameter at the outlet 162 of the high pressure turbine 160) to a larger, second radial diameter 252 (e.g., corresponding to the radial diameter at the inlet 172 of the low pressure turbine 170). In one exemplary embodiment, as shown in FIG. 2, the radial diameters are measured from the mid-point of the inter-turbine duct 180 although such diameters may also be measured from the hub 210 and/or the shroud 220. This transition is provided over an axial length 254. For example, the inlet 202 may be generally axial from the high pressure turbine 160, and at inflection points 212, 222, the hub 210 and shroud 220 extend at an angle 256 to the outlet 204. FIG. 2 illustrates the angle 256 as being generally straight and constant, but other shapes may be provided, including constantly changing or stepped changes in radial diameter. In one exemplary embodiment, the angle 256 may be 30° or larger.

In general, it is advantageous to minimize the axial length 254 of the inter-turbine duct 180 for weight and efficiency. For example, a shorter axial length 254 may reduce the overall axial length of the engine 100 (FIG. 1) as well as reducing friction losses of the air flow. However, as the axial length 254 is decreased, the corresponding angle 256 of the inter-turbine duct 180 between the radial diameters 250, 252 is increased.

During operation, the inter-turbine duct 180 functions to direct the air flow along the radial transition between turbines 160, 170. It is generally advantageous for the air flow to flow smoothly through the inter-turbine duct 180. Particularly, it is advantageous if the air flow adjacent to the shroud 220 maintains a path along the shroud 220 instead of undergoing a boundary layer separation. However, as the axial length 254 decreases and the angle 256 increases, the air flow along the shroud 220 tends to maintain an axial momentum through the inlet 202 and, if not addressed, attempts to separate from the shroud 220, particularly near or downstream the inflection point 222. Such separations may result in vortices or other turbulence that result in undesirable pressure losses through the inter-turbine duct 180 as well as inefficiencies in the low pressure turbine 170.

In one exemplary embodiment, two or more splitter blades 260, 280 are provided within the inter-turbine duct 180 to prevent or mitigate the air flow separation. In some instances, the splitter blades 260, 280 may be referred to as splitters or guide vanes. As described in greater detail below, two splitter blades 260, 280 are illustrated in FIGS. 2 and 3 and may be used in combination or individually.

Each splitter blade 260, 280 generally extends in an axial-circumferential plane, axi-symmetric about the axis 102. In one exemplary embodiment, the splitter blades 260, 280 are aligned in a radial direction such that the splitter blades 260, 280 "overlap" one another. In other words, the first and second splitter blade 260, 280 have upstream ends 262, 282 that share an axial position along the axis 102 in a radial direction and downstream ends 264, 284 that share an axial position along the axis 102 in a radial direction. As such, the splitter blades 260, 280 have the same axial length and a generally parallel to each other. In the depicted exemplary embodiment, the upstream ends 262, 282 of the splitter blades 260, 280 are positioned at, or immediately proximate to, the inlet 202 of the inter-turbine duct 180, and the downstream ends 264, 284 of the splitter blades 260, 280 are positioned at, or immediately proximate to, the outlet 204 of the inter-turbine duct 180. As such, in one exemplary embodiment, the splitter blades 260, 280 extend along approximately the entire axial length 254 of the inter-turbine duct 180. Other embodiments may have different arrangements, including non-overlapping splitter blades and/or splitter blades with different lengths and/or different axial positions. For example, in some embodiments, the splitter blades are relatively shorter than those depicted in FIGS. 2 and 3 based on, in some cases, the length associated with a desired reduction of flow separation and minimization of loss, while avoiding unnecessary weight and cost.

In accordance with exemplary embodiments, the splitter blades 260, 280 may be radially positioned to advantageously prevent or mitigate flow separation. In one embodiment, the radial positions may be a function of the radial distance or span of the inter-turbine duct 180 between hub 210 and shroud 220. For example, if the overall span is considered 100% with the shroud 220 being 0% and the hub 210 being 100%, the first splitter blade 260 may be positioned at approximately 33% (e.g., approximately a third of the distance between the shroud 220 and the hub 210) and the second splitter place 280 may be positioned at approximately 67% (e.g., approximately two-thirds of the distance between the shroud 220 and the hub 210). Although other radial positions may be provided, in one exemplary embodiment, at least one of the splitter blades 260, 280 has a radial position of at least 60%. In this embodiment, the number of splitter blades is limited to two splitter blades, although other embodiments may have a different number of splitter blades.

The splitter blades 260, 280 may be supported in the inter-turbine duct 180 in various ways. In accordance with one embodiment, the splitter blades 260, 280 may be supported by one or more struts 290 that extend generally in the radial direction to secure the splitter blades 260, 280 to the shroud 220 and/or hub 210. In the depicted embodiment, two struts 290 extend between the shroud 220 and hub 210 and support both of the splitter blades 260, 280. In one exemplary embodiment, one or both splitter blades 260, 280 may be annular and continuous about the axis 102, although in other embodiments, one or both splitter blades 260, 280 may be in sections or panels.

The shape and size of the splitter blades 260, 280 may be selected based on computational fluid dynamics (CFD) analysis of various flow rates through the inter-turbine duct 180 and/or weight, installation, cost or efficiency considerations. Although the splitter blades 260, 280 generally extend in axial-circumferential planes, the splitter blades 260, 280 may also have a radial component. For example, in the embodiment shown in FIG. 2, the splitter blades 260, 280 are generally parallel to the shroud 220, although other shapes and arrangements may be provided. For example, in other embodiments, the splitter blades 260, 280 may be parallel to positional or weighted mean line curves that are functions of the shroud 220 and hub 210. For example, for a particular % distance from the shroud 220 (e.g., 33%, 50%, etc.), the radial diameters along axial positions along a mean line curve may be defined by ((1-x%)(D_Shroud)+((x%)(D_Hub), thereby enabling splitter blades 260, 280 that are generally parallel to the respective mean line curve.

During operation, the first splitter blade 260 prevents or mitigates flow separation by guiding the air flow towards the shroud 220 or otherwise confining the flow along the shroud 220. Further, the second splitter blade 280 prevents or mitigates flow separation by guiding the air flow toward the underside of the first splitter blade 260, thereby preventing or mitigating otherwise possible flow separation caused by the first splitter blade 260.

In the depicted embodiment, two splitter blades 260, 280 that extend in axial-circumferential planes are provided. In other embodiments, additional types of guide vanes may be provided, including guide vanes that extend in a radial-circumferential plane partially and/or completely between the hub 210 and shroud 220. Such guide vanes may have shapes similar to a stator vane of a turbine, e.g., a stator vane of a turbine with a concave pressure side and a convex suction side.

Accordingly, the splitter blades 260, 280 provide passive devices that maintain a smooth flow through the inter-turbine duct 180, particularly along the shroud 220. In general, active devices, such as flow injectors, are not necessary.

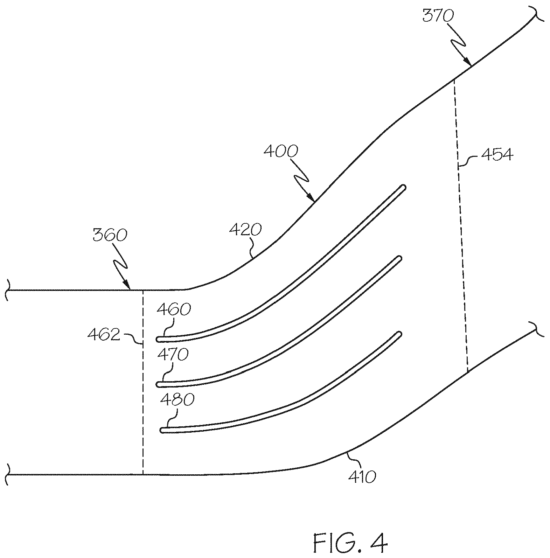

FIG. 4 is a schematic, partial cross-sectional view of a turbine assembly with an inter-turbine duct 480 that may be incorporated into a turbine section, such as the turbine section 150 of the engine 100 of FIG. 1 in accordance with another exemplary embodiment. Unless otherwise noted, the arrangement of the inter-turbine duct 400 is similar to the inter-turbine duct 180 described above with respect to FIGS. 2 and 3.

As above, the inter-turbine duct 400 extends between a high pressure turbine 360 and a low pressure turbine 370 and is defined by an inlet 402, an outlet 404, a hub 410, and a shroud 420.

In this exemplary embodiment, three splitter blades 460, 470, 480 are provided within the inter-turbine duct 480 to prevent or mitigate the air flow separation. As above, each splitter blade 460, 470, 480 generally extends in an axial-circumferential plane, axi-symmetric about the axis. In one exemplary embodiment, the splitter blades 460, 470, 480 are aligned in a radial direction such that the splitter blades "overlap" one another.

As shown in FIG. 4, the first splitter blade 460 may be positioned at approximately 25% (e.g., approximately a quarter of the distance between the shroud 420 and the hub 410), the second splitter blade 470 may be positioned at approximately 50% (e.g., approximately half of the distance between the shroud 420 and the hub 410), and the third splitter blade 480 may be positioned at approximately 75% (e.g., approximately three quarters of the distance between the shroud 420 and the hub 410). As above, although other radial positions may be provided, in one exemplary embodiment, at least one of the splitter blades 460, 470, 480 has a radial position of at least 60%. In accordance with one embodiment, the splitter blades 460, 470, 480 may be supported by one or more struts 490 that extend generally in the radial direction to secure the splitter blades 460, 470, 480 to the shroud 420 and/or hub 410. In this embodiment, the number of splitter blades is limited to three splitter blades, although other embodiments may have a different number of splitter blades. As above, the splitter blade 460, 470, 480 may have shapes generally parallel to the hub 410, the shroud 420, or a mean line that is a function of the hub 410 and shroud 420.

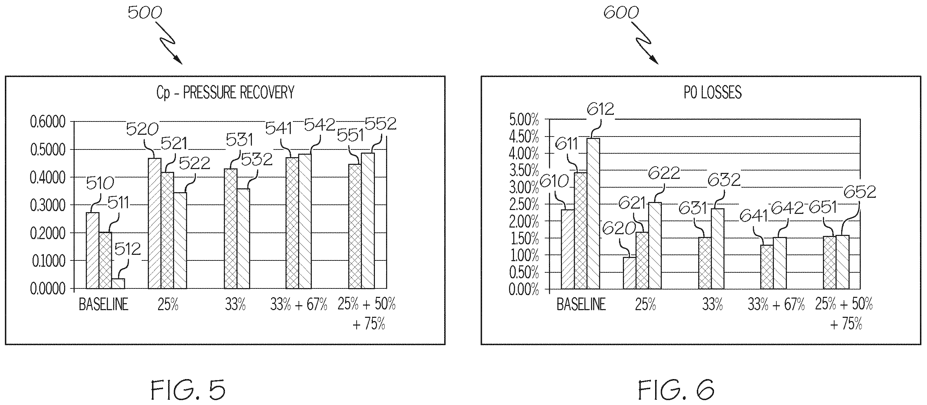

FIGS. 5 and 6 are graphs 500, 600 depicting performance data for the inter-turbine duct 180 depicted in FIG. 2 and the inter-turbine duct 400 depicted in FIG. 4 compared to other inter-turbine duct arrangements and configurations. In particular, graph 500 of FIG. 5 presents different inter-turbine duct arrangements and configurations along the x-axis and corresponding pressure recovery values along the y-axis. In particular, as discussed below, data for five different blade arrangements are presented, and for each, two or three pressure recovery values are presented, including one recovery value corresponding to a first duct configuration with a first axial length to radial width ratio, a further recovery value corresponding to a second duct configuration with a second, more aggressive axial length to radial width ratio, and another recovery value corresponding a third duct configuration with a third, even more aggressive axial length to radial width ratio (e.g., the third configuration has a shorter length and/or greater radial width than the second configuration, and the second configuration has a shorter length and/or greater radial width than the first configuration).

In FIG. 5, bars 510, 511, 512 depict pressure recovery values (Cₚ) for a baseline inter-turbine duct without splitter blades; bars 520, 521, 522 depict pressure recovery values for an inter-turbine duct arrangement with one splitter blade at approximately 25% of the radial span from the shroud; bars 531, 532 depict pressure recovery values for an inter-turbine duct arrangement with one splitter blade at approximately 33% of the radial span from the shroud; bars 541, 542 depict pressure recovery values for an inter-turbine duct arrangement with one splitter blade at approximately 33% and another splitter blade at approximately 67% of the radial span from the shroud (e.g., similar to FIG. 2); and bars 551, 552 depict pressure recovery values for an inter-turbine duct arrangement with one splitter blade at approximately 25%, another splitter blade at approximately 50%, and another splitter blade at approximately 75% of the radial span from the shroud (e.g., similar to FIG. 4). Bars 510, 520represent the results from the first inter-turbine duct configuration; bars 511, 521, 531, 541, 551 represent the results from the second inter-turbine duct configuration, and bars 512, 522, 532, 542, 552 represent the results from the third inter-turbine duct configuration.

Generally, the pressure recovery values (Cₚ) of FIG. 5 represent the amount of static pressure increase between the inlet and exit of the respective duct normalized by the duct inlet dynamic head. In example of FIG. 5, the duct designs have corresponding inlet and exit areas to enable comparison. As shown, the splitter blade arrangements of FIGS. 2 and 4, represented by bars 541, 542, 551, 552 provide improved pressure recovery relative to the other arrangements. In particular, splitter blade arrangements represented by bars 541, 542, 551, 552 provide higher pressure recovery values (Cₚ), as a result of lower pressure losses (e.g., from reduced flow separation), and generally, low pressure turbines with advantageously lower inlet velocities. As such, beneficial and acceptable pressure recovery values (Cₚ) are enabled, even for the two most aggressive duct configurations (e.g., as demonstrated by the bars 541, 542, 551, 552).

Graph 600 of FIG. 6 presents different inter-turbine duct arrangements and configurations along the x-axis and corresponding pressure loss values along the y-axis. Similar to FIG. 5, for each arrangement, two pressure loss values are presented, including one corresponding to a first duct configuration with a first axial length to radial width ratio and another one corresponding a second duct configuration with a second, more aggressive axial length to radial width ratio.

In FIG. 6, bars 610, 611, 612 depict pressure loss values for a baseline inter-turbine duct without splitter blades; bars 620, 621, 622 depict pressure loss values for an inter-turbine duct arrangement with one splitter blade at approximately 25% of the radial span from the shroud; bars 631, 632 depict pressure loss values for an inter-turbine duct arrangement with one splitter blade at approximately 33% of the radial span from the shroud; bars 641, 642 depict pressure loss values for an inter-turbine duct arrangement with one splitter blade at approximately 33% and another splitter blade at approximately 67% of the radial span from the shroud (e.g., similar to FIG. 2); and bars 651, 652 depict pressure loss values for an inter-turbine duct arrangement with one splitter blade at approximately 25%, another splitter blade at approximately 50%, and another splitter blade at approximately 75% of the radial span from the shroud (e.g., similar to FIG. 4). Similar to the data presented by FIG. 5, bars 610, 620 represent the results from the first inter-turbine duct configuration, bars 611, 621, 631, 641, 651 represent the results from the second inter-turbine duct configuration, and bars 612, 622, 632, 642, 652 represent the results from the third inter-turbine duct configuration.

Generally, the pressure loss values depicted in FIG. 6 represent the drop in total pressure from inlet to exit of the duct as a percentage of the duct inlet total pressure. As shown, the splitter blade arrangements of FIGS. 2 and 4, represented by bars 641, 642, 651, 652 provide advantageously lower pressure losses relative to the other arrangements. As such, ducts with beneficial and acceptable pressure losses are enabled, even for the two most aggressive duct configurations (e.g., as demonstrated by the bars 641, 642, 651, 652).

Accordingly, FIGS. 5 and 6 demonstrate that the splitter blade arrangements of FIGS. 2 and 4 provide beneficial performance, even at relatively aggressive duct configurations. In particular, adding a splitter blade at relatively great distance (e.g., 67% or 75%) enables beneficial performance values for the most aggressive duct (e.g., bars 542, 552 of FIG. 5 and bars 642, 652 of FIG. 6). As such, in some exemplary embodiments, at least one splitter blade at greater than approximately 60% may be beneficial in preventing or mitigating flow separation in more aggressive duct configurations.

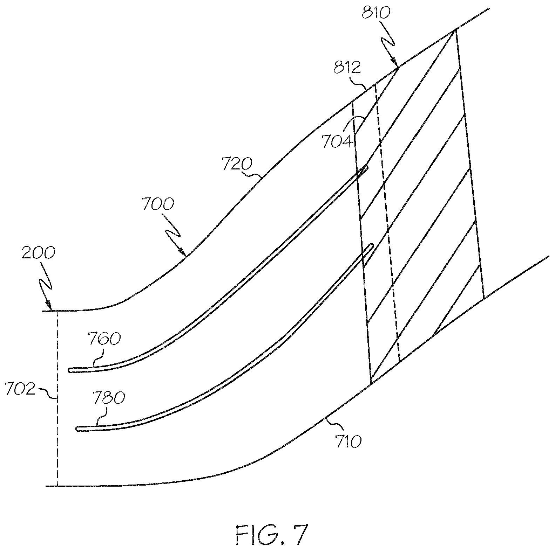

FIG. 7 is a schematic, partial cross-sectional view of a turbine assembly with an inter-turbine duct 700 that may be incorporated into a turbine section, such as the turbine section 150 of the engine 100 of FIG. 1 in accordance with another exemplary embodiment. Unless otherwise noted, the arrangement of the inter-turbine duct 700 is similar to the inter-turbine ducts 180, 400 described above.

As above, the inter-turbine duct 700 extends between a high pressure turbine 800 and a low pressure turbine 810 and is defined by an inlet 702, an outlet 704, a hub 710, and a shroud 720. In this exemplary embodiment, two splitter blades 760, 780 are provided within the inter-turbine duct 700 to prevent or mitigate the air flow separation and are positioned similar to the arrangement of FIG. 2, although one or more additional splitter blades, similar to the embodiment of FIG. 4 may also be provided.

In this embodiment, the splitter blades 760, 780 extend proximate to or beyond the outlet 704 and are supported by a vane 812 of the low pressure turbine 810 that at least partially extends into the inter-turbine duct 700. As such, the splitter blades 760, 780 may be considered to be integrated with the low pressure turbine vane 812. In such an embodiment, struts (e.g., struts 290 of FIG. 2) may be omitted, thereby enabling additional weight reductions. In some instances, this may also enable a shortening of the low pressure turbine 810 since all or a portion of the low pressure turbine vane 812 is incorporated into the inter-turbine duct 700.

Accordingly, inter-turbine ducts are provided with splitter blades that prevent or mitigate boundary separation. By maintaining the energy of the boundary layer flowing through the duct, a more aggressively diverging duct can be used, allowing for the design of more compact, and also more efficient, turbines for engines. In particular, the radial angle of the inter-turbine duct may be increased and the axial length may be decreased to reduce the overall length and weight of the engine and to reduce friction and pressure losses in the turbine section. In one exemplary embodiment, the guide vanes may reduce pressure losses by more than 15%. Additionally, the splitter blades enable the use of a desired ratio between the radial sizes of the high pressure turbine and the low pressure turbine.

In general, the techniques described above can be applied either during the design of a new engine to take advantage of the shorter duct length and optimized area-ratio made possible by the boundary layer control, or to retrofit an existing engine or engine design in order to improve the efficiency of the engine while changing the design as little as possible. Although reference is made to the exemplary gas turbine engine depicted in FIG. 1, it is contemplated that the inter-turbine ducts discussed herein may be adapted for use with other types of turbine engines including, but not limited to steam turbines, turboshaft turbines, water turbines, and the like. Moreover, the turbine engine described above is a turbofan engine for an aircraft, although exemplary embodiments may include without limitation, power plants for ground vehicles such as locomotives or tanks, power-generation systems, or auxiliary power units on aircraft.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A turbine section (150) of a gas turbine engine, the turbine section being annular about a longitudinal axis, the turbine section comprising:
a first turbine with a first inlet and a first outlet;
a second turbine with a second inlet and a second outlet;
an inter-turbine duct (180) extending from the first outlet to the second inlet and configured to direct an air flow from the first turbine to the second turbine, the inter-turbine duct being defined by a hub and a shroud; **characterised in that**
at least two splitter blades (260, 280) disposed within the inter-turbine duct, the at least two splitter blades including a first splitter blade and a second splitter blade radially interior to the first splitter blade, wherein at least the second splitter blade has a radial position that is greater than 60% of a distance from the shroud to the hub.

2. The turbine section of claim 1, wherein the radial position of the first splitter blade is approximately 33% of the distance from the shroud to the hub and the radial position of the second splitter blade is approximately 67% of the distance from the shroud to the hub.

3. The turbine section of claim 1, wherein the radial position of the second splitter blade is approximately 75% of the distance from the shroud to the hub.

4. The turbine section of claim 1, wherein the at least two splitter blades includes a third splitter blade radially positioned in between the first splitter blade and the second splitter blade.

5. The turbine section of claim 4, wherein the radial position of the second splitter blade is approximately 75% of the distance from the shroud to the hub.

6. The turbine section of claim 5, wherein the radial position of the first splitter blade is approximately 25% of the distance from the shroud to the hub, and wherein the radial position of the third splitter blade is approximately 50% of the distance from the shroud to the hub.

7. The turbine section of claim 1, wherein the first and second splitter blades extend in axial-circumferential planes about the longitudinal axis.

8. The turbine section of claim 1, wherein each of first and second splitter blades is generally parallel to a respective mean line curve at a respective position of the each of the first and second splitter blades.

9. The turbine section of claim 1, wherein the first turbine is a high pressure turbine and the second turbine is a low pressure turbine.

10. The turbine section of claim 1, further comprising a stator vane at least partially extending into the inter-turbine duct, and wherein the first and second splitter blades are supported by the stator vane.

## Patentansprüche

1. Turbinenabschnitt (150) eines Gasturbinenmotors, wobei der Turbinenabschnitt ringförmig um eine Längsachse verläuft, wobei der Turbinenabschnitt Folgendes umfasst:
eine erste Turbine mit einem ersten Einlass und einem ersten Auslass;
eine zweite Turbine mit einem zweiten Einlass und einem zweiten Auslass;
einen Zwischenturbinenkanal (180), der sich vom ersten Auslass zum zweiten Einlass erstreckt und dazu ausgelegt ist, einen Luftstrom von der ersten Turbine zur zweiten Turbine zu leiten, wobei der Zwischenturbinenkanal von einer Nabe und einem Mantel definiert wird; **dadurch gekennzeichnet, dass** mindestens zwei Zwischenschaufeln (260, 280) im Zwischenturbinenkanal angeordnet sind, wobei die mindestens zwei Zwischenschaufeln eine erste Zwischenschaufel und eine zweite Zwischenschaufel radial innerhalb der ersten Zwischenschaufel umfassen, wobei mindestens die zweite Zwischenschaufel eine radiale Position aufweist, die mehr als 60 % des Abstands vom Mantel zur Nabe beträgt.

2. Turbinenabschnitt nach Anspruch 1, wobei die radiale Position der ersten Zwischenschaufel etwa 33 % des Abstands vom Mantel zur Nabe beträgt und die radiale Position der zweiten Zwischenschaufel etwa 67 % des Abstands vom Mantel zur Nabe beträgt.

3. Turbinenabschnitt nach Anspruch 1, wobei die radiale Position der zweiten Zwischenschaufel etwa 75 % des Abstands vom Mantel zur Nabe beträgt.

4. Turbinenabschnitt nach Anspruch 1, wobei die mindestens zwei Zwischenschaufeln eine dritte Zwischenschaufel umfassen, die radial zwischen der ersten Zwischenschaufel und der zweiten Zwischenschaufel angeordnet ist.

5. Turbinenabschnitt nach Anspruch 4, wobei die radiale Position der zweiten Zwischenschaufel etwa 75 % des Abstands vom Mantel zur Nabe beträgt.

6. Turbinenabschnitt nach Anspruch 5, wobei die radiale Position der ersten Zwischenschaufel etwa 25 % des Abstands vom Mantel zur Nabe beträgt, und wobei die radiale Position der dritten Zwischenschaufel etwa 50 % des Abstands vom Mantel zur Nabe beträgt.

7. Turbinenabschnitt nach Anspruch 1, wobei sich die erste und zweite Zwischenschaufel in axialen Umfangsebenen um die Längsachse erstrecken.

8. Turbinenabschnitt nach Anspruch 1, wobei die erste und zweite Zwischenschaufel im Allgemeinen parallel zu einer entsprechenden Mittellinienkurve an einer entsprechenden Position der ersten bzw. zweiten Zwischenschaufel sind.

9. Turbinenabschnitt nach Anspruch 1, wobei die erste Turbine eine Hochdruckturbine ist und die zweite Turbine eine Niedrigdruckturbine ist.

10. Turbinenabschnitt nach Anspruch 1, ferner eine Leitschaufel umfassend, die sich zumindest teilweise in den Zwischenturbinenkanal erstreckt, und wobei die erste und zweite Zwischenschaufel von der Leitschaufel getragen werden.

## Revendications

1. Section de turbine (150) d'un moteur à turbine à gaz, la section de turbine étant annulaire autour d'un axe longitudinal, la section de turbine comprenant :
une première turbine avec une première entrée et une première sortie ;
une seconde turbine avec une seconde entrée et une seconde sortie ;
un conduit inter-turbine (180) s'étendant de la première sortie à la seconde entrée et conçu pour diriger un flux d'air de la première turbine vers la seconde turbine, le conduit inter-turbine étant défini par un moyeu et une enveloppe ; **caractérisée en ce que**
au moins deux pales séparatrices (260, 280) sont disposées à l'intérieur du conduit inter-turbine, les au moins deux pales séparatrices comprenant une première pale séparatrice et une deuxième pale séparatrice radialement à l'intérieur de la première pale séparatrice, au moins la deuxième pale séparatrice ayant une position radiale qui est supérieure à 60 % d'une distance entre l'enveloppe et le moyeu.

2. Section de turbine selon la revendication 1, la position radiale de la première pale séparatrice étant égale à environ 33 % de la distance entre l'enveloppe et le moyeu et la position radiale de la deuxième pale séparatrice étant égale à environ 67 % de la distance entre l'enveloppe et le moyeu.

3. Section de turbine selon la revendication 1, la position radiale de la deuxième pale séparatrice étant égale à environ 75 % de la distance entre l'enveloppe et le moyeu.

4. Section de turbine selon la revendication 1, les au moins deux pales séparatrices comprenant une troisième pale séparatrice positionnée radialement entre la première et la deuxième pale séparatrice.

5. Section de turbine selon la revendication 4, la position radiale de la deuxième pale séparatrice étant égale à environ 75 % de la distance entre l'enveloppe et le moyeu.

6. Section de turbine selon la revendication 5, la position radiale de la première pale séparatrice étant égale à environ 25 % de la distance entre l'enveloppe et le moyeu, et la position radiale de la troisième pale séparatrice étant égale à environ 50 % de la distance entre l'enveloppe et le moyeu.

7. Section de turbine selon la revendication 1, les première et seconde pales séparatrices s'étendant dans des plans axiaux circonférentiels autour de l'axe longitudinal.

8. Section de turbine selon la revendication 1, chacune des première et deuxième pales séparatrices étant généralement parallèle à une courbe linéaire moyenne respective au niveau d'une position respective de chacune des première et deuxième pales séparatrices.

9. Section de turbine selon la revendication 1, la première turbine étant une turbine haute pression et la seconde turbine étant une turbine basse pression.

10. Section de turbine selon la revendication 1, comprenant en outre une aube de stator s'étendant au moins partiellement dans le conduit inter-turbine, et les première et deuxième pales séparatrices étant supportées par l'aube de stator.
